# EUROPEAN PATENT APPLICATION

(11) **EP 4 645 479 A1**
(43) Date of publication of application: **05.11.2025**
(21) Application number: 23909375.0
(22) Date of filing: 20.09.2023
(51) Int. Cl.: H01M 4/80, H01M 10/0585

(54) **SECONDARY BATTERY**

(30) Priority: 30.12.2022 CN 202223574668 U
(71) Applicant: BYD Company Limited, Shenzhen, Guangdong 518118 (CN)
(72) Inventor: YIN, Xiaoqiang, Shenzhen, Guangdong 518118 (CN); LIU, Ping, Shenzhen, Guangdong 518118 (CN); LI, Xiangyu, Shenzhen, Guangdong 518118 (CN); LIU, Shifa, Shenzhen, Guangdong 518118 (CN); WU, Shuang, Shenzhen, Guangdong 518118 (CN)
(74) Representative: Mathys & Squire
(86) International application number: PCT/CN2023/120039
(87) International publication number: WO 2024/139440

(57) **Abstract**

A secondary battery, comprising a cathode layer, an anode layer and an insulating layer, wherein the insulating layer is located between the cathode layer and the anode layer; the thickness of the cathode layer is 10 mm to 1000 mm, and the thickness of the anode layer is 5 mm to 1000 mm; and the cathode layer comprises a cathode current collector and a cathode material, the anode layer comprises an anode current collector and an anode material, each of the cathode current collector and the anode current collector is of a three-dimensional porous structure, the absolute value of the difference between the thickness of the cathode current collector and the thickness of the cathode layer is less than 5 mm, and the absolute value of the difference between the thickness of the anode current collector and the thickness of the anode layer is less than 2 mm.

## Description

### CROSS-REFERENCE TO RELATED APPLICATIONS

The present application claims priority to Chinese patent application No. 202223574668.6, filed with the Patent Office of China on December 30, 2022, and entitled "SECONDARY BATTERY", which is incorporated herein by reference in its entirety.

### FIELD

The present application belongs to the field of battery technologies, and in particular, relates to a secondary battery.

### BACKGROUND

Membrane electrodes are the main functional structures of traditional lithium-ion batteries. In the preparation of the membrane electrodes, the thicknesses of the membrane electrodes are related to the content of the electrode active material on the membrane electrodes. In general, the greater the thickness of a membrane electrode, the greater the reversible capacity of the single piece of electrode. However, there are many limitations on the preparation thickness of the existing membrane electrodes, which are mainly reflected in the following: 1. When the thickness of a membrane electrode is too large, the membrane layer is prone to cracking due to excessive stress after the electrode slurry on the surface of the membrane electrode is coated and dried; 2. Excessive thickness of the membrane electrode results in an increased electron conduction path between the electrode material layer and the current collector, leading to decreased electron conduction efficiency and increased cell impedance; 3. When the membrane electrode thickness is too large, the mechanical strength of the membrane electrode is not sufficient to maintain the structural stability of the membrane electrode and the powdering problem of the electrode sheet is easily occurred.

There is an existing method of attempting to reduce costs and increase the thickness of the electrode sheet by thickening the electrode dressing through multilayer coating, but it is limited by stress cracking caused by solvent evaporation in the coating process, and the thickness of the electrode sheet is generally less than 0.5 mm. At the same time, this method offers no advantages in manufacturing.

### SUMMARY

Aiming at the problem that it is difficult to realize the design of excessive thicknesses of electrode sheets in existing secondary batteries, the present application provides a secondary battery.

The technical solutions adopted in the present application to solve the above technical problems are as follows:

The present application provides a secondary battery, which includes:
a cathode layer, the cathode layer having a thickness of 10 mm to 1000 mm; the cathode layer, including:
a cathode current collector; and
a cathode material;
an anode layer, the anode layer having a thickness of 5 mm to 1000 mm; the anode layer, including:
an anode current collector; and
an anode material;
and an insulating layer, the insulating layer being located between the cathode layer and the anode layer;
the cathode current collector and the anode current collector both have a three-dimensional porous structure, the cathode material is filled in the pores of the cathode current collector, the anode material is filled in the pores of the anode current collector and an absolute value of the difference between the thickness of the cathode current collector and the thickness of the cathode layer is less than 5 mm, an absolute value of the difference between the thickness of the anode current collector and the thickness of the anode layer is less than 2 mm.

In an embodiment, the absolute value of the difference between the thickness of the cathode current collector and the thickness of the cathode layer is less than 2 mm.

In an embodiment, the absolute value of the difference between the thickness of the anode current collector and the thickness of the anode layer is less than 1 mm.

In an embodiment, the cathode current collector and the anode current collector have a three-dimensional multilayer mesh structure.

In an embodiment, an average pore diameter of the cathode current collector is not less than 1 mm, and an average pore diameter of the anode current collector is not less than 1 mm.

In an embodiment, the thickness of the cathode layer is 10 mm to 200 mm.

In an embodiment, the thickness of the anode layer is 5 mm to 150 mm.

In an embodiment, the thickness ratio of the cathode layer and the anode layer is (1 to 2.5):1.

In an embodiment, the insulating layer has a thickness of 1 mm to 50 mm and a porosity of 10% to 95%.

In an embodiment, the insulating layer is selected from an insulating filler layer, a porous film or a porous block.

In an embodiment, the insulating filler layer is selected from an Al₂O₃ powder layer, an AlO(OH) powder layer, a SiO₂ powder layer, a PVDF powder layer, or a PTFE powder layer; the porous film is selected from a PP film, a PE film, a PET film, a PAN film, or a fiberglass film; and the porous block body is selected from a porous PE block, a porous PVDF block, or a porous PTFE block.

In an embodiment, the cathode layer, the anode layer, and the insulating layer are each in a plurality of layers, and a plurality of the cathode layers, a plurality of the insulating layers, and a plurality of the anode layers are arranged in a stack and a plurality of the cathode layers and a plurality of the anode layers are staggered one by one and spaced apart, with the insulating layers arranged between adjacent cathode layers and anode layers.

In an embodiment, the cathode layer has a porosity of 10% to 90% and the anode layer has a porosity of 10% to 90%.

In an embodiment, the secondary battery further includes a housing, in which the cathode layer, the anode layer and the insulating layer are located, the housing having a thickness of 2 mm to 200 mm.

In an embodiment, the housing is a metal housing, and the inner wall of the housing is arranged with an insulating liner layer.

In an embodiment, the secondary battery further includes a positive current collecting terminal and a negative current collecting terminal, wherein the positive current collecting terminal is connected to the positive current collector and led out of the housing, and the negative current collecting terminal is connected to the negative current collector and led out of the housing.

In an embodiment, the secondary battery is a lithium-ion battery, a sodium-ion battery, a potassium-ion battery, a zinc-ion battery, a magnesium-ion battery, a calcium-ion battery, an aluminum-ion battery, or a hybrid-ion battery.

According to the secondary battery provided in the present application, a three-dimensional porous structure is used as the cathode current collector and the anode current collector, the cathode material is filled in the pores of the cathode current collector, and the anode material is filled in the pores of the anode current collector, meanwhile, the absolute value of the difference between the thickness of the cathode current collector and the cathode layer is less than 5 mm, and the absolute value of the difference between the thickness of the anode current collector and the anode layer is less than 2 mm, so that the cathode current collector and the anode current collector can provide better supporting effect for the cathode material of the cathode layer and the anode material of the anode layer from the inside, and the self-supporting strength of the cathode layer and the anode layer is improved. At the same time, as the cathode current collector and the anode current collector are substantially spread all over the cathode layer and the anode layer, the efficiency of the electronic conduction can be effectively improved, and it breaks through the limitation of the thickness of the electrode sheet in the traditional membrane electrode manufacturing process caused by coating stress cracking or poor electronic conductivity and mechanical strength of the electrode sheet, and can realize the thickening of the electrode module as well as the expansion of the capacity of the single electric core.

### BRIEF DESCRIPTION OF THE DRAWINGS

FIG. 1 is a schematic diagram of a structure of a secondary battery provided by the present application;
FIG. 2 is a schematic diagram of a structure of an anode layer provided by the present application;

Reference numbers in the drawings of the specification are as follows:
1 anode layer; 11 anode current collector; 2 insulating layer; 3 cathode layer; 31 cathode current collector; 4 anode current collecting terminal; 5 cathode current collecting terminal

### DETAILED DESCRIPTION

In order to make the technical problems, technical solutions and beneficial effects solved by the present application clearer and more understandable, the present application is described in further detail hereinafter in combination with the accompanying drawings and embodiments. It will be understood that the specific embodiments described herein are only for the purpose of explaining the present application and are not intended to limit the present application.

In the description of the present application, the term "thickness" refers to the distance between the two surfaces of the laminated structure having the largest area, and in the present application, the cathode layer, the insulating layer and the anode layer are laminated in the direction of their thickness.

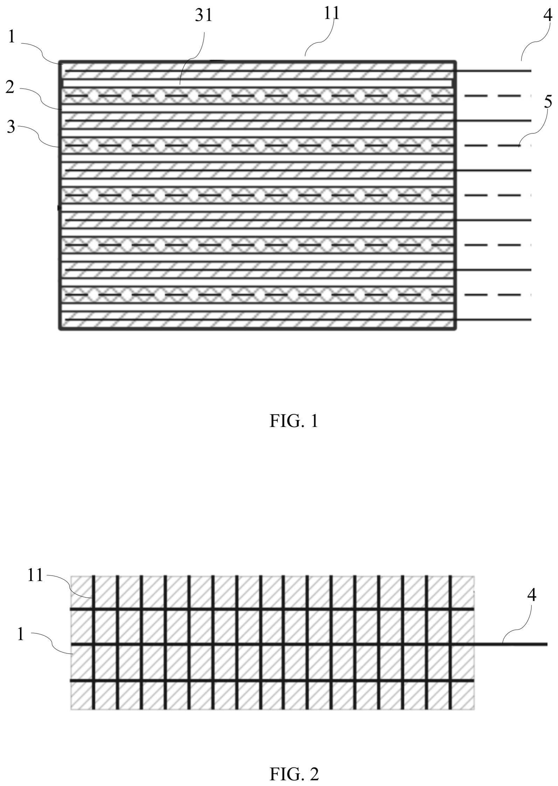

Referring to Figs. 1 and 2, an embodiment of the present application provides a secondary battery including a cathode layer 3, an anode layer 1, and an insulating layer 2. The insulating layer 2 is disposed between the cathode layer 3 and the anode layer 1, the cathode layer 3 has a thickness of 10 mm to 1000 mm, and the anode layer 1 has a thickness of 5 mm to 1000 mm. The cathode layer 3 includes a cathode current collector 31 and a cathode material. The anode layer 1 includes an anode current collector 11 and an anode material. The cathode current collector 31 and the anode current collector 11 both have a three-dimensional porous structure, and the cathode material is filled in the pores of the cathode current collector 31, and the anode material is filled in the pores of the anode current collector 11, and the absolute value of the difference between the thickness of the cathode current collector 31 and the thickness of the cathode layer 3 is less than 5 mm, and the absolute value of the difference between the thickness of the anode current collector 11 and the thickness of the anode layer 1 is less than 2 mm.

A three-dimensional porous structure is adopted for the cathode current collector 31 and the anode current collector 11, the cathode material is filled in the pores of the cathode current collector 31, and the anode material is filled in the pores of the anode current collector 11, and at the same time, the absolute value of the thickness difference between the cathode current collector 31 and the cathode layer 3 is less than 5 mm, and the absolute value of the thickness difference between the anode current collector 11 and the anode layer 1 is less than 2 mm, so that the cathode current collector 31 and the anode current collector 11 can provide better supporting effect for the cathode material of the cathode layer 3 and the anode material of the anode layer 1 from the inside to improve the self-supporting strength of the cathode layer 3 and the anode layer 1. At the same time, since the cathode current collector 31 and the anode current collector 11 are substantially spread all over the inside of the cathode layer 3 and the anode layer 1, the efficiency of the electronic conduction can be effectively improved, and it breaks through the limitation of the thickness of the electrode sheet, due to coating stress cracking or poor electronic conductivity and poor mechanical strength of the electrode sheet, in the traditional manufacturing process of the membrane electrode, and capable of realizing the thickening of the electrode module and the expansion of the single electric core.

In some embodiments, the absolute value of the difference between the thickness of the cathode current collector 31 and the thickness of the cathode layer 3 is less than 2 mm.

In some embodiments, the absolute value of the difference between the thickness of the anode current collector 11 and the thickness of the anode layer 1 is less than 1 mm.

It is to be noted that, maintaining the substantial consistency between the thickness of the cathode current collector 31 and the thickness of the cathode layer 3 and maintaining the substantial consistency between the thickness of the anode current collector 11 and the thickness of the anode layer 1 are advantageous for the thickening of the electrode sheet of the secondary battery provided by the present technical solution, while a certain amount of machining error is acceptable, and it is also advantageous for reducing the machining difficulty of the cathode layer 3 and the anode layer 1. Therefore, when the absolute value of the difference between the thickness of the cathode current collector 31 and the thickness of the cathode layer 3 and the absolute value of the difference between the thickness of the anode current collector 11 and the thickness of the anode layer 1 are in the above-mentioned range, it is advantageous to guarantee the supporting strength of the cathode current collector 31 and the anode current collector 11 for the cathode layer 3 and the anode layer 1 on the basis of satisfying the processing conditions.

In some embodiments, the cathode current collector 31 and the anode current collector 11 have a three-dimensional multilayer mesh structure.

Setting the cathode current collector 31 and the anode current collector 11 as a three-dimensional multilayer mesh structure, the contact area between the cathode material and the cathode current collector 31, and the contact area between the anode material and the anode current collector 11 can be increased, so as to improve the electron conduction efficiency, and at the same time, the three-dimensional multilayer mesh structure has a structural strengthening effect on the cathode layer 3 and the anode layer 1 to ensure the structural stability of the cathode layer 3 and the anode layer 1.

In some embodiments, the cathode current collector 31 and the anode current collector 11 are formed from woven metal wires.

In some embodiments, the cathode current collector 31 and the anode current collector 11 are each independently selected from one or more of Cu, Al, Ni, Fe, Mn, Ti, and conductive fibers.

In one embodiment, the cathode current collector 31 is selected from Al and the anode current collector 11 is selected from Cu.

In some embodiments, an average pore size of the cathode current collector 31 is 1 mm or more, and an average pore size of the anode current collector 11 is 1 mm or more.

In the description of the present application, "an average pore diameter of the cathode current collector 31" and "an average pore diameter of the anode current collector 11" can be obtained by metallographically grinding the cathode layer and the anode layer to obtain a cross-section, photographing the cross-section with an optical microscope, performing binarization processing on Image pixels to extract the distribution characteristics of the current collector, performing processing with Image J software to obtain pore diameters of pores of the current collector, and calculating an average value of all pores in the cross-section photograph to obtain an average pore diameter.

When the average pore size of the cathode current collector 31 and the anode current collector 11 is in the above-mentioned range, the filling of the cathode material in the cathode current collector 31 and the filling of the anode material in the anode current collector 11 can be ensured to increase the overall compaction density and energy density.

In some embodiments, the thicknesses of the cathode layer 3 may be 10 mm, 20 mm, 30 mm, 40 mm, 50 mm, 60 mm, 70 mm, 80 mm, 90 mm, 100 mm, 110 mm, 120 mm, 130 mm, 140 mm, 150 mm, 170 mm, 190 mm, 200 mm, 300 mm, 400 mm, 500 mm, 600 mm, 700 mm, 800 mm, 900 mm, or 1000 mm.

In some embodiments, the thickness of the cathode layer 3 is 10 mm to 200 mm.

As the thickness of the cathode layer 3 increases, it is advantageous to increase the energy density of the battery, while the diffusion efficiency of the electrolyte ions in the cathode layer 3 decreases, and when the thickness of the cathode layer 3 is in the above-mentioned range, on the one hand, the energy density of the secondary battery increases; and on the other hand, it is advantageous to ensure the ionic conductivity thereof.

In some embodiments, the thickness of the anode layer 1 may be 5 mm, 10 mm, 20 mm, 30 mm, 40 mm, 50 mm, 60 mm, 70 mm, 80 mm, 90 mm, 100 mm, 110 mm, 120 mm, 130 mm, 140 mm, 150 mm, 170 mm, 190 mm, 200 mm, 300 mm, 400 mm, 500 mm, 600 mm, 700 mm, 800 mm, 900 mm or 1000 mm.

In some embodiments, the thickness of the anode layer 1 is 5 mm to 150 mm.

In some embodiments, the thickness ratio of the cathode layer 3 and the anode layer 1 is (1 to 2.5): 1.

By adjusting the thickness ratio of the cathode layer 3 and the anode layer 1 to adjust the capacity of the cathode layer 3 and the capacity of the anode layer 1 to be in a proper range, when the thickness ratio of the cathode layer 3 and the anode layer 1 is in the above range, it is advantageous to ensure sufficient utilization of the capacities of the cathode layer 3 and the anode layer 1 while avoiding generation of metal dendrites.

In some embodiments, the insulating layer 2 has a thickness of 1 mm to 50 mm and a porosity of 10% to 95%.

Specifically, the thickness of the insulating layer 2 may be 1 mm, 5 mm, 10 mm, 20 mm, 30 mm, 40 mm or 50 mm; and the porosity of the insulating layer 2 may be 10%, 20 %, 30%, 40%, 50%, 60%, 70%, 80%, 90% or 95%.

In some embodiments, the insulating layer 2 has a porosity of 20% to 80%.

The thickness and porosity of the insulating layer 2 are related to the short-circuit risk of the battery and the shuttling efficiency of the electrolyte ions, and when the thickness and porosity of the insulating layer 2 are in the above range, the contact risk of the cathode layer 3 and the anode layer 1 can be effectively blocked, and the shuttling of electrolyte ions is facilitated.

In some embodiments, the insulating layer 2 is selected from an insulating filler layer, a porous film or a porous block.

The insulating filler layer is a stacking layer of insulating powder, and when the insulating layer 2 is selected from insulating filler layers, the insulating filler layer can be obtained by simply filling the housing with insulating powder, which has the advantage of easy operation.

When the insulating layer 2 is selected from a porous film, it has high ionic conduction efficiency.

The porous block is an insulating block with a porous structure, and when the insulating layer 2 is selected from the porous block, it has better structural strength, which is conducive to improving the puncture-resistant capability of the insulating layer 2 so as to enhance the safety of the secondary battery.

In some embodiments, the insulating filler layer is selected from an Al₂O₃ powder layer, an AlO(OH) powder layer, a SiO₂ powder layer, a PVDF powder layer, or a PTFE powder layer; the porous film is selected from a PP film, a PE film, a PET film, a PAN film, or a fiberglass film; and the porous block body is selected from a porous PE block, a porous PVDF block, or a porous PTFE block.

In some embodiments, the cathode material includes a cathode active material, a cathode binder, and a cathode conductive agent, the cathode active material may be a lithium-ion battery cathode material or a sodium-ion battery cathode material, and the lithium-ion battery cathode material includes one or more of LiFePO₄, LiFeₓMn₁₋ₓPO₄ (0 ≤ x ≤ 1), LiNiₓCo_{y}Mn_{1-x-y}O₂ (0 ≤ x ≤ 1, 0≤y≤1), LiNiₓCo_{y}Al_{1-x-y}O₂ (0≤x≤1, 0≤y≤1), LiNiₓCo_{y}Mn_{z}Al_{1-x-y-z}O₂(0≤x≤1, b0≤y≤1, 0≤z≤1), LiMn₂O₄, LiMnO₂, LiNiO₂, LiCoO₂, Li₂MnO₃, LiNi_{0.5}Mn_{1.5}O₂, and the sodium-ion battery cathode material includes one or more of Prussian white, NaNiₓFe_{y}Mn_{1-x-y}O₂(0≤x:≤1, 0≤y≤1),Na₃V₂(PO₄)₃, Na₂FeP₂O₇, Na₂Fe₂(SO₄)₃. The positive binder includes one or more of PVDF, PTFE, and PEO. The cathode conductive agent includes one or more of graphite powder, carbon black, carbon nanotubes, graphene, polypyrrole, polyaniline, and polythiophene.

In some embodiments, the anode material includes an anode active substance, an anode binder, and an anode conductive agent, the anode active substance including one or more of graphite, hard carbon, silicon, silicon oxide, Li₄Ti₅O₁₂, TiO₂, Fe₂O₃, and MoS₂. The anode binder includes one or more of methylcellulose, styrene butadiene rubber, polyacrylic acid, sodium alginate, polyimide, and polypropylene alcohol. The anode conductive agent includes one or more of conductive graphite, Super P, carbon black, carbon nanotubes, and graphene.

In some embodiments, functional fillers including an electrically conductive filler and/or an insulating filler are optionally added to the cathode material and the anode material; the electrically conductive filler includes one or more of electrically conductive carbon fibers, electrically conductive carbon rods, and electrically conductive carbon tubes; and the insulating filler includes one or more of glass fibers, Al₂O₃, and SiO₂.

In some embodiments, each of the cathode layers 3, the anode layers 1, and the insulating layers 2 is multi-layered, and a plurality of the cathode layer 3, a plurality of the insulating layer 2 and a plurality of the anode layer 1 are arranged in a stack, and the plurality of the cathode layer 3 and the plurality of the anode layer 1 are staggered one by one and spaced apart, with a single layer of the insulating layer 2 arranged between adjacent the cathode layer 3 and the anode layer 1.

In other embodiments, the number of the cathode layer 3, the anode layer 1 and the insulating layer 2 may also be a single layer.

In some embodiments, the cathode layer 3 has a porosity of 10% to 90% and the anode layer 1 has a porosity of 10% to 90%.

When the porosity of the cathode layer 3 and the porosity of the anode layer 1 are in the above range, on the one hand, it is advantageous to improve the penetration efficiency of the electrolyte into the cathode layer 3 and the anode layer 1, and to improve the ionic conduction properties; on the other hand, the cathode layer 3 and the anode layer 1 are ensured to have a certain structural strength, and the structural stability of the cathode layer 3 and the anode layer 1 is maintained in the charging-discharging cycle.

In some embodiments, the secondary battery further includes a housing, in which the cathode layer 3, the anode layer 1 and the insulating layer 2 are located. The housing has a thickness of 2 mm to 200 mm.

In some embodiments, the thickness of the housing is 5 mm to 100 mm.

In some embodiments, the housing is a metal housing or an insulating housing, and the metal housing includes Fe, Al and their alloy parts, plated parts or composite parts, and the insulating housing includes one or more of PE, PP, PTFE, PET, PAN.

In some embodiments, the housing is a metal housing, and the housing is provided with an insulating liner layer on an inner wall.

In some embodiments, the insulating liner layer has a thickness of 1 mm to 10 mm.

In an embodiment, the insulating liner layer is selected from Al₂O₃ ceramic layer coating.

The insulating lining layer serves to avoid direct contact between the housing and the anode layer 1 or the cathode layer 3, thus avoiding the occurrence of short circuits in the housing.

The housing includes a cover plate and a casing having an opening, the cover plate being used to close the opening of the casing.

In some embodiments, the housing may be cylindrical, rectangular, square, diamond-column, etc., as well as abnormal-shaped battery shapes that match different installation size requirements. In some embodiments, the housing is rectangular or square, a shape that maximizes the use of space during assembly of the energy storage system, simplifies the assembly process, and improves the mechanical reliability of the integrated system.

In some embodiments, the secondary battery further includes a cathode current collecting terminal 5 and an anode current collecting terminal 4, wherein the cathode current collecting terminal 5 is connected to the cathode current collector 31 and led out to the external of the housing, and the anode current collecting terminal 4 is connected to the anode current collector 11 and led out to the external of the housing.

By leading the cathode current collecting terminal 5 and the anode current collecting terminal 4 directly out to the external of the housing, the setting of a bus structure in the housing can be avoided and the energy density of the secondary battery can be improved.

In some embodiments, the cathode current collecting terminal 5 is an aluminum pillar with a diameter of 5 mm to 100 mm, when the number of the cathode layers 3 is more than one, a plurality of the cathode layers 3 lead out with a plurality of cathode current collecting terminals 5, a plurality of the cathode current collecting terminals 5 forming an array of aluminum pillars. The anode current collecting terminal 4 is a copper pillar with a diameter of 5 mm to 50 mm, when the number of the anode layers 1 is more than one, a plurality of the anode layers 1 lead out with a plurality of anode current collecting terminals 4, and a plurality of the anode current collecting terminals 4 form an array of copper pillars. The cathode current collecting terminals 5 and the anode current collecting terminals 4 lead from the same side or both sides of the housing, respectively. The distance between adjacent cathode current collecting terminals 5 and adjacent anode current collecting terminals 4 is more than10mm to meet the heat dissipation requirements of the terminals.

In some embodiments, the secondary battery is a lithium-ion battery, a sodium-ion battery, a potassium-ion battery, a zinc-ion battery, a magnesium-ion battery, a calcium-ion battery, an aluminum-ion battery, or a hybrid-ion battery.

The secondary battery breaks through the limitation of the thickness of the dressing in the production process of the traditional battery electric core, and greatly simplifies the production process of the large-capacity monomer, and has good compatibility with the product shape. In particular, when applied to a long-duration electrochemical energy storage system, the monomer capacity can be greatly increased, the production efficiency can be improved, and the cost of the single electric core and the system cost can be reduced.

The foregoing is only a preferred embodiment of the present application and is not intended to limit the application, and any modifications, equivalent substitutions, improvements, etc., made within the spirit and principles of the present application shall be included in the scope of protection of the present application.

## Claims

1. A secondary battery, comprising:
a cathode layer (3), the cathode layer (3) having a thickness of 10 mm to 1000 mm; the cathode layer (3) comprising:
a cathode current collector (31); and
a cathode material;
an anode layer (1), the anode layer (1) having a thickness of 5 mm to 1000 mm;
the anode layer (1) comprising:
an anode current collector (11); and
an anode material;
and an insulating layer (2), the insulating layer (2) being located between the cathode layer (3) and the anode layer (1);
the cathode current collector (31) and the anode current collector (11) both having a three-dimensional porous structure, the cathode material being filled in the pores of the cathode current collector (31), the anode material being filled in the pores of the anode current collector (11), and
an absolute value of the difference between the thickness of the cathode current collector (31) and the thickness of the cathode layer (3) being less than 5 mm,
an absolute value of the difference between the thickness of the anode current collector (11) and the thickness of the anode layer (1) being less than 2 mm.

2. The secondary battery according to claim 1, wherein the absolute value of the difference between the thickness of the cathode current collector (31) and the thickness of the cathode layer (3) is less than 2 mm.

3. The secondary battery according to any one of claims 1 to 2, wherein the absolute value of the difference between the thickness of the anode current collector (11) and the thickness of the anode layer (1) is less than 1 mm.

4. The secondary battery according to any one of claims 1 to 3, wherein the cathode current collector (31) and the anode current collector (11) have a three-dimensional multilayer mesh structure.

5. The secondary battery according to any one of claims 1 to 4, wherein an average pore diameter of the cathode current collector (31) is not less than 1mm, and an average pore diameter of the anode current collector (11) is not less than 1mm.

6. The secondary battery according to any one of claims 1to 5, wherein the thickness of the cathode layer (3) is 10 mm to 200 mm.

7. The secondary battery according to any one of claims 1 to 6, wherein the thickness of the anode layer (1) is 5 mm to 150 mm.

8. The secondary battery according to any one of claims 1 to 7, wherein the thickness ratio of the cathode layer (3) and the anode layer (1) is (1 to 2.5):1.

9. The secondary battery according to any one of claims 1 to 8, wherein the insulating layer (2) has a thickness of 1 to 50mm and a porosity of 10% to 95%.

10. The secondary battery according to any one of claims 1 to 9, wherein the insulating layer (2) is selected from an insulating filler layer, a porous film, or a porous block.

11. The secondary battery according to claim 10, wherein the insulating filler layer is selected from an Al₂O₃ powder layer, an AlO(OH) powder layer, a SiO₂ powder layer, a PVDF powder layer, or a PTFE powder layer; the porous film being selected from a PP film, a PE film, a PET film, a PAN film, or a fiberglass film; and the porous block being selected from a porous PE block, a porous PVDF block, or a porous PTFE block.

12. The secondary battery according to any one of claims 1 to 11, wherein the cathode layer (3), the anode layer (1), and the insulating layer (2) are each provided in a plurality of layers, and a plurality of the cathode layer (3), a plurality of the insulating layer (2), and a plurality of the anode layer (1) are arranged in a stack and a plurality of the cathode layer (3) and a plurality of the anode layer (1) are staggered one by one and spaced apart, with the insulating layers (2) arranged between adjacent cathode layers (3) and anode layers (1).

13. The secondary battery according to any one of claims 1 to 12, wherein the cathode layer (3) has a porosity of 10% to 90% and the anode layer (1) having a porosity of 10% to 90%.

14. The secondary battery according to any one of claims 1 to 13, wherein the secondary battery further comprises a housing, in which the cathode layer (3), the anode layer (1) and the insulating layer (2) are located, and the housing has a thickness of 2 mm to 200 mm.

15. The secondary battery according to claim 14, wherein the housing is a metal housing and the inner wall of the housing is arranged with an insulating lining layer.

16. The secondary battery according to claim 14, wherein the secondary battery further comprises a cathode current collecting terminal (5) and an anode current collecting terminal (4), the cathode current collecting terminal (5) being connected to the cathode current collector (31) and led out to the external of the housing, and the anode current collecting terminal (4) being connected to the anode current collector (11) and led out to the external of the housing.

17. The secondary battery according to any one of claims 1 to 16, wherein the secondary battery is a lithium-ion battery, a sodium-ion battery, a potassium-ion battery, a zinc-ion battery, a magnesium-ion battery, a calcium-ion battery, an aluminum-ion battery, or a hybrid-ion battery.
